# FASCICULE DE BREVET EUROPEEN

(11) **EP 3 035 145 B1**
(45) Date de publication et mention de la délivrance du brevet: **21.06.2017**
(21) Numéro de dépôt: 15200998.1
(22) Date de dépôt: 18.12.2015
(51) Int. Cl.: E06B 9/171, G05B 19/40, E06B 9/68, E06B 9/72

(54) **INSTALLATION DE CONTRÔLE DE L'ENROULEMENT D'UN ÉCRAN**
ANLAGE ZUR AUFROLLSTEUERUNG EINES ANZEIGEBILDSCHIRMS
CONTROL SYSTEM FOR THE WINDING OF A SHUTTER

(30) Priorité: 19.12.2014 FR 1462979
(43) Date de publication de la demande: 22.06.2016
(73) Titulaire: Somfy SAS, 74300 Cluses (FR)
(72) Inventeur: TO, Karina, HONG KONG (CN)
(74) Mandataire: Lavoix

(56) Documents cités:
- EP-A1- 1 111 486
- EP-A2- 2 357 544
- WO-A1-2013/068400
- WO-A2-03/081357
- FR-A1- 2 835 877
- FR-A1- 3 005 618

## Description

L'invention a trait à une installation de contrôle de l'enroulement d'un écran d'occultation autour d'un arbre.

Dans le domaine des dispositifs de fermeture ou de protection solaire, il est connu de manoeuvrer un écran d'occultation d'une ouverture entre une configuration ouverte, dans laquelle il est enroulé autour d'un arbre d'enroulement, généralement à l'intérieur d'un caisson situé au-dessus de l'ouverture, et une position fermée, où il s'étend verticalement dans l'ouverture en dessous de l'arbre d'enroulement. Cette manoeuvre est réalisée par une installation de contrôle, qui comprend une unité de contrôle et un actionneur pourvu d'un moteur électrique, l'unité de contrôle et l'actionneur étant en communication sans fil entre eux afin de commander l'enroulement de l'écran.

Il est souhaitable de disposer d'une installation bidirectionnelle, c'est-à-dire d'une installation où un utilisateur est capable d'envoyer une commande à l'actionneur et reçoit un message de réaction concernant une telle commande. Pour le fonctionnement de l'actionneur, il est souhaitable de connaître au minimum la position précise de l'arbre d'enroulement ou de l'écran, lors de son déplacement de sa première configuration vers sa deuxième configuration, et vice versa. Pour ce faire, il est connu d'équiper l'actionneur avec un capteur qui calcule la position de l'écran, par exemple en détectant un couple fourni par le moteur électrique, ceci grâce à la surveillance d'un courant d'alimentation de ce moteur. La position connue de l'actionneur peut être utilisée pour déterminer l'arrêt de l'alimentation du moteur électrique à l'arrivée dans une des configurations prédéfinies. Ainsi, l'actionneur dispose généralement de moyens de communication unidirectionnels, pour recevoir des ordres de commande.

Il est également connu d'équiper l'actionneur de plusieurs capteurs, par exemple d'un accéléromètre, d'autres dispositifs électromécaniques basés sur des mouvements relatifs entre certaines pièces constitutives de l'actionneur ou de capteurs permettant de détecter des paramètres environnants, notamment la température. Enfin, il est connu d'utiliser des capteurs d'effort. Ces solutions mécaniques ou mécatroniques permettent que l'actionneur ait un comportement intelligent, mais ne peuvent se substituer aux moyens de communication bidirectionnels, permettant un retour d'information vers un point de commande.

Il est par ailleurs connu, par exemple de DE-A-92 07 730, d'utiliser un seul capteur externe à l'actionneur et qui est relié électriquement à l'unité de contrôle de façon filaire. Or, cette approche ne fournit qu'une seule mesure concernant la position de l'écran. De plus, la liaison filaire entre capteur externe et unité de contrôle cause des problèmes d'encombrement, ainsi qu'un coût supérieur, notamment dû aux contraintes d'installation.

C'est à ces inconvénients qu'entend plus particulièrement remédier l'invention en proposant une nouvelle installation de contrôle de l'enroulement d'un écran d'occultation, dont la mesure de la position de l'écran est améliorée de façon simple et permettant une amélioration des installations existantes.

A cet effet, l'invention concerne une installation de contrôle de l'enroulement d'un écran d'occultation, autour d'un arbre, l'installation comprenant un actionneur intégrant un module électronique de commande et un premier capteur de position de l'écran, connecté au module électronique. L'installation comprend également une unité de contrôle adaptée pour transmettre une commande au module électronique. Conformément à l'invention, l'installation comprend en outre un deuxième capteur de position de l'écran, le deuxième capteur étant distinct du premier capteur et en communication avec l'unité de contrôle.

Grâce à l'invention, la détection de la position de l'écran d'occultation est réalisée par deux capteurs, le premier capteur étant intégré dans l'actionneur et le deuxième capteur étant externe à l'actionneur. Ainsi, la mesure réalisée par le premier capteur est utilisée par l'actionneur afin de piloter l'écran lors de la réception d'une commande. La mesure effectuée par le deuxième capteur est utilisée par l'unité de contrôle afin de fournir à un utilisateur une information concernant la position atteinte par l'écran. Les mesures fournies par les deux capteurs peuvent être utilisées indépendamment ou conjointement.

Selon des aspects avantageux mais non obligatoire de l'invention, une telle installation peut incorporer une ou plusieurs des caractéristiques suivantes, prises dans toute combinaison techniquement admissible :
- le deuxième capteur est installé à distance de l'actionneur, notamment monté sur un support de l'arbre opposé à l'actionneur ;
- le deuxième capteur est monté sur un support de tête de l'actionneur ou une pièce solidaire de ce support ;
- l'actionneur comprend des moyens de communication sans fil pour établir une communication sans fil exclusivement unidirectionnelle, notamment selon un premier protocole radio, de l'unité de contrôle au module électronique de commande ;
- l'actionneur comprend des moyens de communication sans fil pour établir une communication sans fil bidirectionnelle, notamment selon un premier protocole radio, entre l'unité de contrôle et le module électronique de commande ;
- le deuxième capteur comprend des moyens de communication sans fil pour établir une communication sans fil exclusivement unidirectionnelle, notamment selon un deuxième protocole radio, du deuxième capteur à l'unité de contrôle ;
- le deuxième capteur comprend des moyens de communication sans fil pour établir une communication sans fil bidirectionnelle, notamment selon un deuxième protocole radio, entre le deuxième capteur de position et l'unité de contrôle ;
- la communication établie par les moyens de communication de l'actionneur est selon un premier protocole radio, la communication établie par les moyens de communication du deuxième capteur est selon un deuxième protocole radio et le premier protocole présente une fréquence radio de communication qui est différente de celle du deuxième protocole ;
- une unité passerelle est reliée électriquement à l'unité de contrôle, cette unité passerelle étant configurée pour créer une liaison de communication entre l'unité de contrôle et au moins un terminal de saisie et de contrôle ;
- l'unité de contrôle inclut des moyens de comparaison entre des données numériques relatives au deuxième capteur, notamment provenant du deuxième capteur, et des données numériques relatives au premier capteur, notamment envoyées au premier capteur ;
- l'installation comprend une télécommande, qui est distincte de l'unité de contrôle et qui est adaptée pour transmettre une commande au module électronique de l'actionneur et pour envoyer une information concernant cette commande à l'unité de contrôle.

L'invention sera mieux comprise et d'autres avantages de celle-ci apparaitront plus clairement à la lumière de la description qui va suivre d'un mode de réalisation de l'invention, donnée uniquement à titre d'exemple non limitatif et faite en référence aux dessins annexés, dans lesquels :
- la figure 1 est une représentation schématique d'une installation de contrôle de l'enroulement d'un écran d'occultation conforme à l'invention ;
- la figure 2 est une représentation schématique en perspective de l'installation de contrôle de la figure 1 ;
- la figure 3 est une coupe partielle et axiale de l'installation de la figure 2 selon un premier mode de réalisation de l'invention ; et
- la figure 4 est une coupe analogue à la figure 3 selon un deuxième mode de réalisation de l'invention.

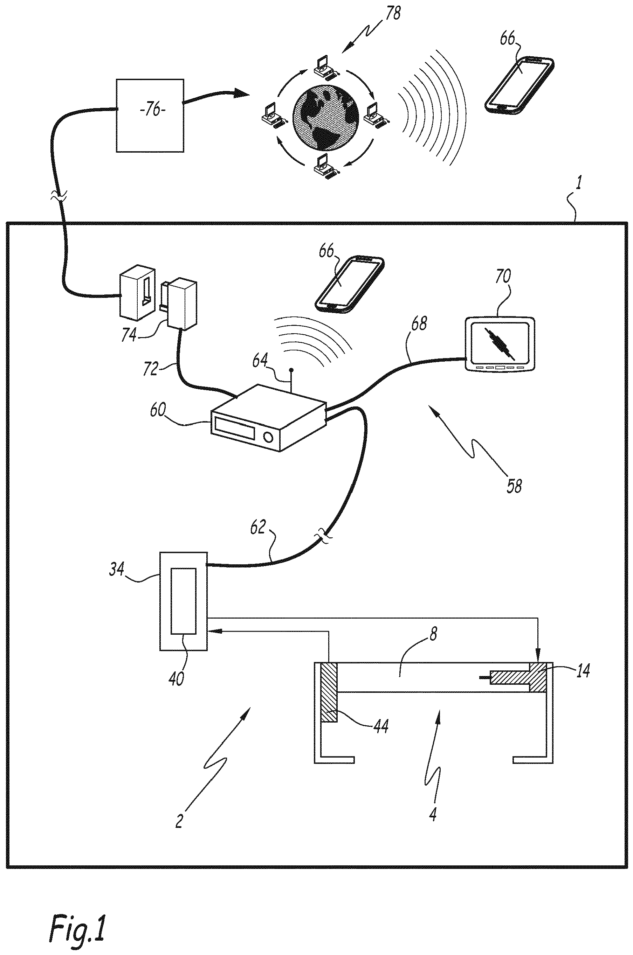

A la figure 1, un environnement domestique 1, tel qu'une maison ou un appartement, comporte une installation de contrôle 2 de l'enroulement d'un écran d'occultation 4. L'écran ou tablier 4 est formé par plusieurs lames 6 articulées entre elles et qui comprennent une lame inférieure 6A, destinée à venir en appui contre le seuil d'une ouverture O obturée par l'écran 4 lorsqu' elle est en position basse, ainsi qu'une lame supérieure 6B accrochée à un arbre d'enroulement 8 au moyen de deux articulations ou éléments de liaison 10, ces éléments de liaison pouvant être rigides ou souples.

L'arbre 8 est monté à l'intérieur d'un caisson 12, avec possibilité de rotation autour d'un axe X2, qui est horizontal et fixe et qui constitue un axe central pour l'installation 2.

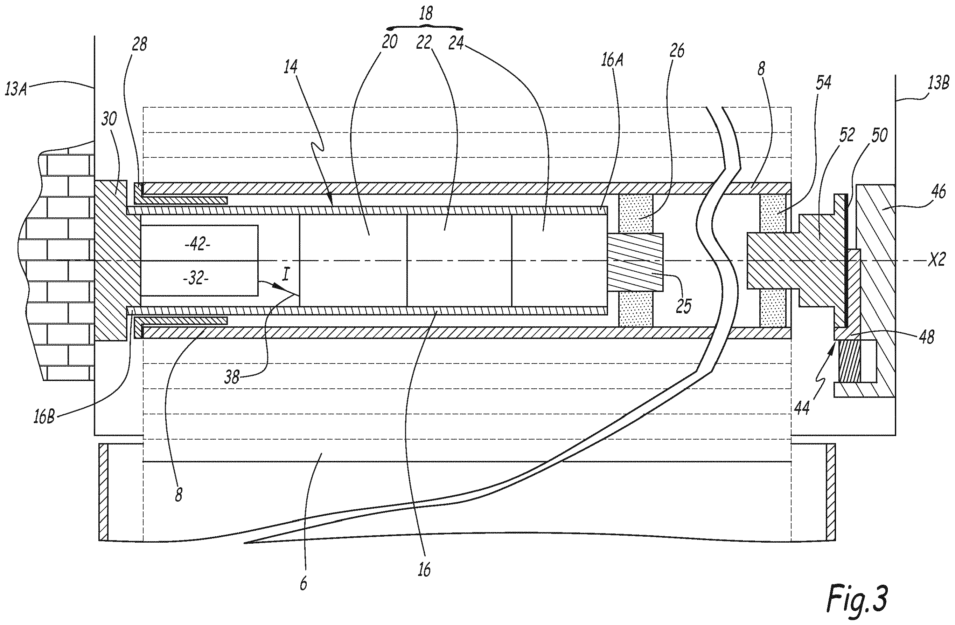

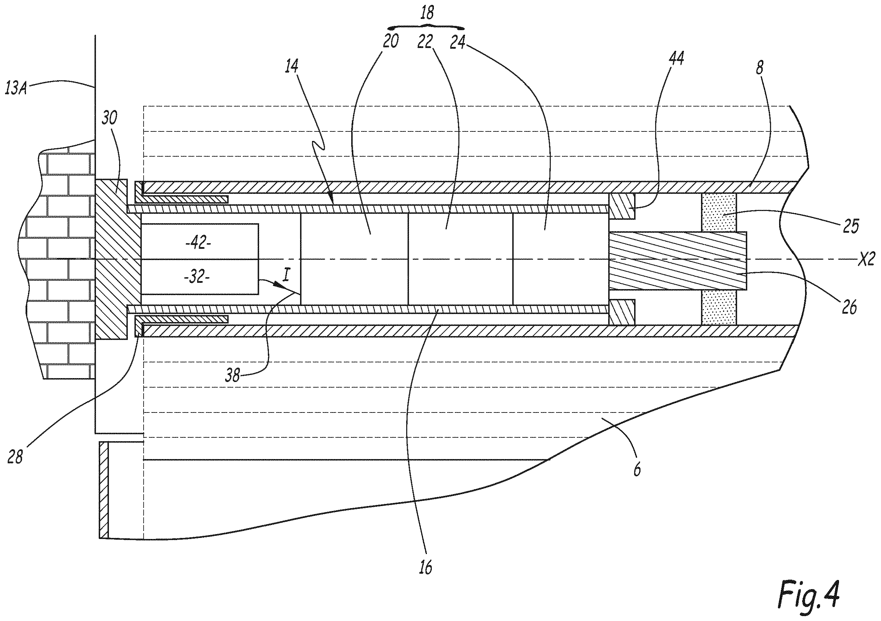

L'arbre 8 est entrainé en rotation autour de l'axe X2 au moyen d'un actionneur tubulaire 14, plus particulièrement visible aux figures 3 et 4, dans lesquelles l'écran 4 est représenté en position partiellement relevée, c'est-à-dire en partie enroulé autour de l'arbre d'enroulement 8. L'actionneur 14 comprend un tube cylindrique fixe 16 ou carter centré sur l'axe X2 et dans lequel est monté un motoréducteur 18 qui comprend un moteur électrique 20. Le moteur électrique 20 peut être un moteur asynchrone, par exemple avec un rotor en cage d'écureuil ou un moteur à courant continu sans balais à commutation électronique également appelé « BLDC »(de l'anglais *BrushLess Direct Current).* Un moteur de ce type comprend un rotor pourvu d'aimants permanents et un stator pourvu de plusieurs enroulements.

Le motoréducteur 18 comprend également un frein 22, à ressort ou à plateau et un réducteur 24. On note 25 l'arbre de sortie du réducteur 24 qui s'étend en saillie à une extrémité 16A du tube fixe 16 et qui entraine une roue 26 solidaire en rotation de l'arbre 8.

L'arbre 8 tourne autour de l'axe X2 et du tube fixe 16 grâce à une liaison pivot assurée par une couronne-palier 28 montée à proximité d'une extrémité 16B du tube fixe 16 opposée à l'extrémité 16A.

L'actionneur 14 comprend également un support de tête 30, qui fait saillie à l'extrémité 16B du tube 16 et permet de fixer l'actionneur 14 au niveau d'une première paroi latérale 13A du caisson 12, soit directement sur la paroi ou par l'intermédiaire d'un accessoire de fixation. Ce support de tête 30 obture également le tube 16 et supporte un module électronique 32 de commande de l'alimentation électrique du moteur 20. L'actionneur 14 est alimenté au travers d'un câble d'alimentation (non représenté), traversant le support de tête 30 et connecté au module électronique de commande 32.

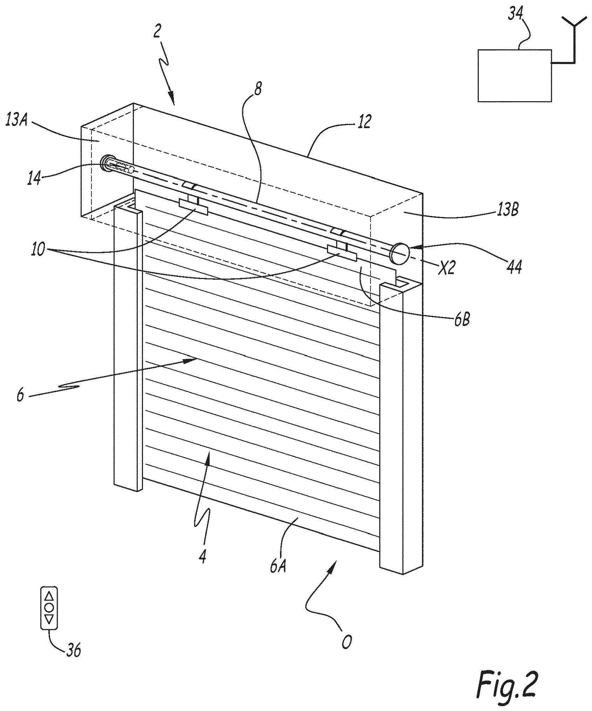

Comme représenté aux figures 1 et 2, le module électronique 32 est en communication avec une unité de contrôle 34 adaptée pour transmettre un ordre de commande au module électronique 32. Un ordre de commande de mouvement fourni par l'unité de contrôle 34 provoque une alimentation du moteur 20 lui permettant d'entrainer l'arbre 8, dans un sens ou dans l'autre, en rotation autour de l'axe X2, en fonction de l'ordre de commande, issu notamment des choix de l'utilisateur. Un courant I circule alors dans un connecteur électrique 38 qui relie le module électronique 32 au moteur électrique 20. Un ordre de commande d'arrêt provoque une coupure de l'alimentation du moteur électrique et un arrêt du mouvement de l'écran.

A la figure 2 est également représentée une télécommande 36.

L'unité de contrôle 34 comprend des moyens 40 de communication sans fil, qui sont configurés pour établir une communication sans fil, exclusivement unidirectionnelle et notamment selon un premier protocole radio, de l'unité de contrôle 34 au module électronique 32.

L'actionneur 14, plus précisément le module électronique 32, comprend ainsi des moyens de réception selon le premier protocole radio, notamment une antenne radio.

L'actionneur 14 intègre également un premier capteur 42 de position de l'écran 4. Ce premier capteur 42 est connecté au module électronique 32, par exemple de façon filaire. Pour la clarté des dessins, le premier capteur 42 est représenté de façon schématique aux figures 3 et 4.

Le premier capteur 42 est un capteur électronique ou mécatronique ou optique. Par exemple, dans le cas d'un moteur BLDC, le premier capteur 42 fonctionne sur la base de la surveillance du courant I fourni au moteur 20 par le module électronique 32. Ce courant I est mis en relation, de façon connue en soi, avec un couple mécanique fourni par le moteur électrique 20. En pratique, le courant I fournit une mesure de la rotation de l'arbre 8, ainsi que de la position de l'écran 4, le couple mécanique étant en étroite corrélation avec les grandeurs précitées. Alternativement, Ile premier capteur fonctionne sur une surveillance de la tension ou des variations de tension aux bornes des enroulements du moteur électrique. Le premier capteur 42 peut également comprendre un ou plusieurs capteurs à effet Hall en vis-à-vis d'une bague magnétisée tournante.

La mesure issue du premier capteur 42 est utilisée pour le pilotage de l'écran 4 etégalement pour détecter des butées, ainsi que des obstacles.

L'installation de contrôle 2 comprend en outre un deuxième capteur 44 de position de l'arbre 8, distinct du premier capteur 42 et en communication avec l'unité de contrôle 34. Le deuxième capteur 44 est externe à l'actionneur 14. En particulier, le deuxième capteur 44 est installé à distance de l'actionneur 14, notamment sur un support 46 de l'arbre 8, lequel support 46 est opposé à l'actionneur 14 et permet de fixer le deuxième capteur 44 sur une deuxième paroi latérale 13B du caisson 12.

Le deuxième capteur 44 est alimenté par des batteries, notamment des batteries lithium. En variante, le capteur 44 est alimenté via un inducteur électromagnétique ou via un système de récupération de l'énergie. Selon une autre variante non représentée, le deuxième capteur 44 est alimenté de façon filaire par l'actionneur 14.

Le deuxième capteur 44 présenté ci-dessous est un capteur mécatronique. Le deuxième capteur 44 comprend une partie fixe 48 solidaire au support 46. Le deuxième capteur 44 comprend également une partie 50 mobile en rotation autour de l'axe X2 par rapport à la partie fixe 48. La partie mobile 50 est agencée partiellement à l'intérieur de l'arbre 8. La partie 50 comprend un arbre de sortie 52 saillant par rapport à celle-ci et qui est rendu solidaire d'une roue 54, cette roue étant elle-même solidaire de l'arbre 8. En pratique, l'arbre 8, entraîné par l'actionneur 14, comme décrit ci-dessus, entraîne lui-même la roue 54 qui transmet une rotation à la partie mobile 50 du deuxième capteur 44. Le deuxième capteur 44 comprend également un circuit électronique de mesure qui détecte la rotation de l'arbre 8 par l'intermédiaire de la rotation de la partie mobile 50 vis-à-vis de la partie fixe du deuxième capteur 44, calcule la position de l'écran 4 et fournit une donnée numérique de cette position. Le circuit électronique de mesure du deuxième capteur 44 est de préférence situé sur la partie fixe 48 du deuxième capteur 44. Un tel circuit de mesure n'est pas représenté aux figures pour la clarté des dessins.

Le deuxième capteur 44 comprend également des moyens de communication sans fil pour établir une communication sans fil exclusivement unidirectionnelle, notamment selon un deuxième protocole radio, du deuxième capteur de position 44 à l'unité de contrôle 34. Les moyens de communication sont configurés pour envoyer les données numériques fournies par le circuit de mesure du deuxième capteur 44 et relatives à la position de l'écran 4. Les moyens de communication du deuxième capteur 44 sont avantageusement configurés pour transmettre également une information concernant l'état de ses batteries d'alimentation.

Selon une variante non représentée aux figures, le deuxième capteur 44 est un capteur électronique ou optique*)*. Par exemple, le deuxième capteur 44 comprend un ou plusieurs capteurs à effet Hall en vis-à-vis d'une bague magnétisée tournante.

Comme décrit ci-dessus, la communication établie par les moyens de communication 40 entre l'unité de contrôle 34 et l'actionneur 14 est selon le premier protocole radio, qui présente une première fréquence radio de communication de l'ordre de 433 MHz, par exemple 433,42 MHz. La communication établie par les moyens de communication entre l'unité de contrôle 34 et le deuxième capteur 44 est selon le deuxième protocole radio, qui présente une deuxième fréquence radio de communication de l'ordre de 433 MHz, par exemple 433,92 MHz. En pratique, les fréquences radio de communications des premier et deuxième protocoles sont différentes, éventuellement tout en étant du même ordre de grandeur, afin d'éviter des problématiques de communications croisées, ainsi que des perturbations des signaux. Le fait que les fréquences soient conservées dans le même ordre de grandeur permet en revanche de conserver des composants électroniques et un circuit de communication identiques.

L'unité de contrôle 34 inclut enfin des moyens de comparaison, tels qu'un circuit comparateur, entre les données numériques, qui proviennent du deuxième capteur 44, et les données numériques, qui sont envoyées au premier capteur 42 et/ou qui proviennent du premier capteur 42 ou des données en mémoire de l'unité de contrôle 34, par exemple issues d'un apprentissage. La fonction de ces moyens de comparaison est de détecter un dysfonctionnement, comme par exemple la non-exécution d'une commande, ou un obstacle pour l'écran 4, tel qu'une butée.

L'installation 2 comprend également une unité passerelle 60 qui est reliée électriquement à l'unité de contrôle 34 via un conducteur électrique 62. L'unité passerelle 60 est configurée pour décoder des données numériques de l'unité de contrôle 34. L'unité passerelle 60 est ainsi configurée pour créer une liaison de communication entre l'unité de contrôle 34 et des premier 66 et deuxième 70 terminaux de saisie et de contrôle. Les terminaux 66 et 70 sont configurés pour afficher les données numériques reçues et envoyer une commande à l'unité de contrôle 34 : chacun de ces terminaux correspond ainsi à une interface homme-machine. L'unité passerelle 60 et l'unité de contrôle 34 peuvent également être des unités distinctes communiquant sans fil entre elles. Elles peuvent également être intégrées dans un même boîtier.

En particulier, l'unité passerelle 60 comprend des moyens 64 de communication sans fil, notamment selon un protocole IEEE 802.11, également appelé protocole Wi-Fi. Les moyens de communication 64 sont aptes à recevoir et émettre selon ce protocole Wi-Fi et sont configurés pour transmettre les données numériques au premier terminal 66. En pratique, le premier terminal de saisie et de contrôle est un smartphone et/ou une tablette et/ou une télévision et/ou un ordinateur. Le smartphone 66 est équipé d'une application apte à afficher les données numériques reçues et éventuellement apte à afficher une interface de saisie d'ordres de commande.

L'unité passerelle 60 comprend également des moyens 68 de communication filaire avec le deuxième terminal de saisie et de contrôle 70, notamment un écran configuré pour afficher les données numériques et équipé de plusieurs touches de commande.

La liaison de communication créée par l'unité passerelle 60 permet de construire un réseau domotique local 58, comprenant l'actionneur 14, l'unité de contrôle 34 et les terminaux de saisie et de contrôle 66 et 70. Ainsi les terminaux de saisie et de contrôle 66 et 70 sont utilisés par un utilisateur pour envoyer des ordres de commande à l'actionneur 14 et recevoir un retour d'information sur le mouvement associé à l'ordre de commande émis.

L'unité passerelle 60 comprend également des moyens 72 de connexion filaire via un connecteur téléphonique 74 à un serveur informatique 76, ce serveur 76 étant configuré pour transmettre les données numériques à un réseau informatique 78, notamment à un réseau internet. Le réseau internet 78 transmet via des normes de téléphonie mobile les données numériques au smartphone 66 qui est équipé de l'application précitée afin d'afficher les données numériques reçues. Cela permet de relier l'installation 2 au smartphone 66 même quand le smartphone 66 se trouve en dehors de l'environnement domestique 1. En d'autres termes, cela permet d'étendre le réseau informatique au-delà de l'environnement domestique 1. L'unité de contrôle 34 et l'unité passerelle 60 peuvent évidemment être communes pour plusieurs actionneurs dans le même environnement domestique 1.

En complément facultatif, tel que montré à la figure 2, l'installation 2 comprend en outre une télécommande 36 distincte de l'unité de contrôle 34. La télécommande 36 est adaptée pour transmettre une commande au module électronique 32 de l'actionneur 14 selon un troisième protocole radio interprétable par l'actionneur. Ce troisième protocole radio est préférentiellement identique au premier protocole, notamment il présente une fréquence radio de communication de 433,42 MHz. L'actionneur peut ainsi recevoir et interpréter indifféremment les ordres en provenance de l'unité de contrôle 34 et de la télécommande 36. Un ordre de commande de mouvement fourni par la télécommande 36 provoque une rotation de l'arbre 8 comme décrit ci-dessus pour l'unité de contrôle 34. La télécommande 36 est aussi configurée pour envoyer une information concernant l'ordre de commande, à l'unité de contrôle 34 de manière à ce que l'unité 34 puisse retransmettre cette information aux terminaux 66 et 70 et/ou à ses moyens de comparaison.

Divers aménagements et variantes de l'installation 2 sont par ailleurs envisageables. A titre d'exemples :
- les moyens de communication 40 de l'unité de contrôle 34 sont configurés pour établir une communication sans fil bidirectionnelle, notamment selon le premier protocole radio, entre l'unité de contrôle 34 et le module électronique 32 ;
- les moyens de communication du deuxième capteur 44 sont configurés pour établir une communication sans fil bidirectionnelle, notamment selon le deuxième protocole radio, entre le deuxième capteur 44 et l'unité de contrôle 34 par exemple, afin d'envoyer une information de paramétrage au deuxième capteur 44 ;
- le deuxième capteur 44 est monté du côté de l'actionneur 14, installé sur le tube 16 de l'actionneur 14, comme représenté à la figure 4 ;
- le deuxième capteur 44 est installé sur le support de tête 30 de l'actionneur 14. En particulier, le deuxième capteur 44 est intégré à un accessoire de fixation du support de tête 30 de l'actionneur 14 ou intercalé entre l'accessoire ou la paroi latérale 13A et le support de tête 30. Le deuxième capteur présente alors une partie fixe 48 montée sur l'accessoire ou la paroi latérale 13A et une partie mobile 50 intercalée entre le carter 16 de l'actionneur 14 et l'arbre 8, notamment en lieu et place d'au moins une partie de la couronne 28. La partie mobile 50 est fixée en rotation à l'arbre 8, notamment par des cannelures ou tout autre moyen de fixation de préférence amovible. Ce mode de réalisation offre l'avantage de simplifier l'alimentation du capteur, puisqu'il peut être alimenté à partir du même câble d'alimentation que l'actionneur 14. De même que dans le mode de réalisation précédent, le circuit électronique du deuxième capteur 44 est située de préférence sur la partie fixe 18 du deuxième capteur 44.

Le mode de réalisation et les variantes envisagés ci-dessus peuvent être combinés entre eux pour générer de nouveaux modes de réalisation.

## Revendications

1. Installation (2) de contrôle de l'enroulement d'un écran d'occultation (4) autour d'un arbre (8), comprenant :
- un actionneur (14) intégrant un module électronique de commande (32) et un premier capteur (42) de position de l'écran, connecté au module électronique, et
- une unité de contrôle (34) adaptée pour transmettre une commande au module électronique,
**caractérisée en ce que** l'installation (2) comprend en outre un deuxième capteur (44) de position de l'arbre (8), distinct du premier capteur (42) et en communication avec l'unité de contrôle (34).

2. Installation selon la revendication 1, **caractérisée en ce que** le deuxième capteur (44) est installé à distance de l'actionneur (14), notamment monté sur un support (46) de l'arbre (8) opposé à l'actionneur.

3. Installation selon la revendication 1, **caractérisée en ce que** le deuxième capteur (44) est monté sur un support de tête (30 ; 16) de l'actionneur (14) ou une pièce (16) solidaire de ce support.

4. Installation selon l'une quelconque des revendications précédentes, **caractérisée en ce que** l'actionneur (14) comprend des moyens (40) de communication sans fil pour établir une communication sans fil exclusivement unidirectionnelle, notamment selon un premier protocole radio, de l'unité de contrôle (34) au module électronique de commande (32).

5. Installation selon l'une quelconque des revendications 1 à 3, **caractérisée en ce que** l'actionneur (14) comprend des moyens (40) de communication sans fil pour établir une communication sans fil bidirectionnelle, notamment selon un premier protocole radio, entre l'unité de contrôle (34) et le module électronique de commande (32).

6. Installation selon l'une quelconque des revendications précédentes, **caractérisée en ce que** le deuxième capteur (44) comprend des moyens de communication sans fil pour établir une communication sans fil exclusivement unidirectionnelle, notamment selon un deuxième protocole radio, du deuxième capteur à l'unité de contrôle (34).

7. Installation selon l'une des revendications 1 à 5, **caractérisée en ce que** le deuxième capteur (44) comprend des moyens de communication sans fil pour établir une communication sans fil bidirectionnelle, notamment selon un deuxième protocole radio, entre le deuxième capteur de position et l'unité de contrôle (34).

8. Installation selon l'une des revendications 4 ou 5, prise en combinaison avec l'une des revendications 6 ou 7, **caractérisée en ce que** la communication établie par les moyens de communication (40) de l'actionneur (14) est selon un premier protocole radio, **en ce que** la communication établie par les moyens de communication du deuxième capteur (44) est selon un deuxième protocole radio, et **en ce que** le premier protocole présente une fréquence radio de communication qui est différente de celle du deuxième protocole.

9. Installation selon l'une quelconque des revendications précédentes, **caractérisée en ce qu'**une unité passerelle (60) est reliée électriquement à l'unité de contrôle (34), cette unité passerelle étant configurée pour créer une liaison de communication (58) entre l'unité de contrôle (34) et au moins un terminal de saisie et de contrôle (66, 70).

10. Installation selon l'une quelconque des revendications précédentes, **caractérisée en ce que** l'unité de contrôle (34) inclut des moyens de comparaison entre des données numériques relatives au deuxième capteur (44), notamment provenant du deuxième capteur, et des données numériques relatives au premier capteur (42), notamment envoyées au premier capteur.

11. Installation selon l'une quelconque des revendications précédentes, **caractérisée en ce que** l'installation (2) comprend une télécommande (36), qui est distincte de l'unité de contrôle (34) et qui est adaptée pour transmettre une commande au module électronique (32) de l'actionneur (14) et pour envoyer une information concernant cette commande à l'unité de contrôle (34).

## Patentansprüche

1. Anlage (2) zur Steuerung des Aufwickelns eines Abdeckschirms (4) um eine Welle (8), umfassend:
- eine Stellvorrichtung (14), die ein elektronisches Steuermodul (32) und einen ersten, mit dem elektronischen Modul verbunden Sensor (42) einer Position des Schirms einschließt, und
- eine Steuereinheit (34), die geeignet ist, einen Steuerbefehl an das elektronische Modul zu übertragen,
**dadurch gekennzeichnet, dass** die Anlage (2) außerdem einen zweiten Sensor (44) einer Position der Welle (8), unterschiedlich zum ersten Sensor (42) und in Verbindung mit der Steuereinheit (34), umfasst.

2. Anlage nach Anspruch 1, **dadurch gekennzeichnet, dass** der zweite Sensor (44) mit Abstand zur Stellvorrichtung (14) installiert ist, insbesondere an einem Träger (46) der Welle (8) entgegengesetzt zur Stellvorrichtung montiert ist.

3. Anlage nach Anspruch 1, **dadurch gekennzeichnet, dass** der zweite Sensor (44) an einem Träger (30; 16) des Kopfes der Stellvorrichtung (14) oder einem mit diesem Träger verbundenen Teil (16) montiert ist.

4. Anlage nach einem beliebigen der vorhergehenden Ansprüche,
**dadurch gekennzeichnet, dass** die Stellvorrichtung (14) Mittel (40) zur drahtlosen Kommunikation umfasst, um eine drahtlose Kommunikation nur in eine Richtung, insbesondere gemäß einem ersten Funkprotokoll, von der Steuereinheit (34) zum elektronischen Steuermodul (32) herzustellen.

5. Anlage nach einem beliebigen der Ansprüche 1 bis 3, **dadurch gekennzeichnet, dass** die Stellvorrichtung (14) Mittel (40) zur drahtlosen Kommunikation umfasst, um eine bidirektionale drahtlose Kommunikation, insbesondere gemäß einem ersten Funkprotokoll, zwischen der Steuereinheit (34) und dem elektronischen Steuermodul (32) herzustellen.

6. Anlage nach einem beliebigen der vorhergehenden Ansprüche,
**dadurch gekennzeichnet, dass** der zweite Sensor (44) Mittel zur drahtlosen Kommunikation umfasst, um eine drahtlose Kommunikation nur in einer Richtung, insbesondere gemäß einem zweiten Funkprotokoll, des zweiten Sensors zur Steuereinheit (34) herzustellen.

7. Anlage nach einem der Ansprüche 1 bis 5, **dadurch gekennzeichnet, dass** der zweite Sensor (44) Mittel zur drahtlosen Kommunikation umfasst, um eine drahtlose bidirektionale Kommunikation, insbesondere gemäß einem zweiten Funkprotokoll, zwischen dem zweiten Positionssensor und der Steuereinheit (34) herzustellen.

8. Anlage nach einem der Ansprüche 4 oder 5, in Kombination mit einem der Ansprüche 6 oder 7, **dadurch gekennzeichnet, dass** die von den Kommunikationsmitteln (40) der Stellvorrichtung (14) hergestellte Kommunikation eine solche gemäß einem ersten Funkprotokoll ist, dass die von den Kommunikationsmitteln des zweiten Sensors (44) hergestellte Kommunikation eine solche gemäß einem zweiten Funkprotokoll ist und dass das erste Protokoll eine Kommunikationsfunkfrequenz aufweist, die unterschiedlich zu der des zweiten Protokolls ist.

9. Anlage nach einem beliebigen der vorhergehenden Ansprüche,
**dadurch gekennzeichnet, dass** eine Gateway-Einheit (60) elektrisch mit der Steuereinheit (34) verbunden ist, wobei die Gateway-Einheit ausgebildet ist, eine Kommunikationsverbindung (58) zwischen der Steuereinheit (34) und mindestens einem Eingabe- und Steuerterminal (66, 70) zu erzeugen.

10. Anlage nach einem beliebigen der vorhergehenden Ansprüche,
**dadurch gekennzeichnet, dass** die Steuereinheit (34) Mittel zum Vergleichen zwischen den zweiten Sensor (44) betreffenden numerischen Daten, insbesondere von dem zweiten Sensor kommend, und den ersten Sensor (42) betreffenden numerischen Daten, insbesondere gesendet an den ersten Sensor, einschließt.

11. Anlage nach einem beliebigen der vorhergehenden Ansprüche, **dadurch gekennzeichnet, dass** die Anlage (2) eine Fernbedienung (36) umfasst, die von der Steuereinheit (34) getrennt ist und die angepasst ist, einen Steuerbefehl an das elektronische Modul (32) der Stellvorrichtung (14) zu übertragen und eine Information hinsichtlich dieses Steuerbefehls an die Steuereinheit (34) zu schicken.

## Claims

1. System (2) for controlling the winding of a blackout screen (4) about a shaft (8), comprising:
- an actuator (14) incorporating an electronic command module (32) and a first sensor (42) for the position of the screen, connected to the electronic module, and
- a control unit (34) adapted to transmit a command to the electronic module, **characterised in that** the system (2) further comprises a second sensor (44) for the position of the shaft (8), which sensor is separate from the first sensor (42) and is in communication with the control unit (34).

2. System according to claim 1, **characterised in that** the second sensor (44) is installed at a distance from the actuator (14), especially is mounted on a support (46) of the shaft (8) opposite the actuator.

3. System according to claim 1, **characterised in that** the second sensor (44) is mounted on a head support (30; 16) of the actuator (14) or a part (16) that is integral with that support.

4. System according to any one of the preceding claims, **characterised in that** the actuator (14) comprises wireless communication means (40) for establishing exclusively unidirectional wireless communication, especially in accordance with a first radio protocol, from the control unit (34) to the electronic command module (32).

5. System according to any one of claims 1 to 3, **characterised in that** the actuator (14) comprises wireless communication means (40) for establishing bidirectional wireless communication, especially in accordance with a first radio protocol, between the control unit (34) and the electronic command module (32).

6. System according to any one of the preceding claims, **characterised in that** the second sensor (44) comprises wireless communication means for establishing exclusively unidirectional wireless communication, especially in accordance with a second radio protocol, from the second sensor to the control unit (34).

7. System according to any one of claims 1 to 5, **characterised in that** the second sensor (44) comprises wireless communication means for establishing bidirectional wireless communication, especially in accordance with a second radio protocol, between the second position sensor and the control unit (34).

8. System according to either claim 4 or claim 5, taken in combination with either claim 6 or claim 7, **characterised in that** the communication established by the communication means (40) of the actuator (14) is in accordance with a first radio protocol, **in that** the communication established by the communication means of the second sensor (44) is in accordance with a second radio protocol, and **in that** the first protocol has a radio communication frequency that is different from that of the second protocol.

9. System according to any one of the preceding claims, **characterised in that** a gateway unit (60) is electrically connected to the control unit (34), the gateway unit being configured to create a communication link (58) between the control unit (34) and at least one input and control terminal (66, 70).

10. System according to any one of the preceding claims, **characterised in that** the control unit (34) includes means for comparison between numerical data relating to the second sensor (44), especially coming from the second sensor, and numerical data relating to the first sensor (42), especially sent to the first sensor.

11. System according to any one of the preceding claims, **characterised in that** the system (2) comprises a remote control (36) which is separate from the control unit (34) and which is adapted to transmit a command to the electronic module (32) of the actuator (14) and to send information concerning that command to the control unit (34).
